## Europäisches Patentamt

## European Patent Office

## Office européen des brevets

(19)

(11) Veröffentlichungsnummer: **0 046 999**
**B1**

(12) **EUROPÄISCHE PATENTSCHRIFT**

(45) Veröffentlichungstag der Patentschrift:
**04.12.85**

(51) Int. Cl.⁴: **B 23 K 9/28**, B 23 K 9/02

(21) Anmeldenummer: **81106738.8**

(22) Anmeldetag: **28.08.81**

(54) Elektrische Schweisspistole mit drehbarem Brennerkopf.

(30) Priorität: **29.08.80 DE 3032696**

(43) Veröffentlichungstag der Anmeldung:
**10.03.82 Patentblatt 82/10**

(45) Bekanntmachung des Hinweises auf die Patenterteilung:
**04.12.85 Patentblatt 85/49**

(84) Benannte Vertragsstaaten:
**CH FR GB IT LI NL**

(56) Entgegenhaltungen:
**DE - A - 2 909 743**
**FR - A - 2 057 162**
**FR - A - 2 352 623**
**US - A - 2 776 385**
**US - A - 3 493 716**

(73) Patentinhaber: **Reeh, Mathilde,**
**Adalbert-Stifter-Strasse 1, D-8034 Germering (DE)**

(72) Erfinder: **Reeh, Holger, Adalbert-Stifter-Strasse 1,**
**D-8034 Germering (DE)**
Erfinder: **Geiss, Josef, Otto-Hahn-Strasse 1,**
**D-8013 Haar (DE)**

(74) Vertreter: **Patentanwälte Viering & Jentschura,**
**Steinsdorfstrasse 6, D-8000 München 22 (DE)**

BUNDESDRUCKEREI BERLIN

## Beschreibung

Die Erfindung bezieht sich auf eine elektrische Schweißpistole mit drehbarem Brennerkopf.

Eine derartige Schweißpistole weist im allgemeinen außer einer am drehbaren Brennerkopf angeordneten Schweißelektrode, welche an eine Schweißstromleitung angeschlossen ist, eine Schutzgasdüse, die an eine Schutzgasleitung angeschlossen ist, eine Flüssigkeitskühlung des Schweißkopfes mit einer Flüssigkeits-Vorlaufleitung und einer Flüssigkeits-Rücklaufleitung, einen steuerbaren Antriebsmotor für den Schweißkopf und häufig eine Zusatzdrahtspule mit einem gesonderten Drahtvorschubmotor auf, der auf einem mit der Antriebswelle des Schweißkopfes um dessen Drehachse drehbaren Spulenhalter angeordnet ist und über entsprechende Steuerleitungen gespeist und gesteuert wird. Das Schutzgas, das Kühlwasser, der Schweißstrom und sonstige Speise- und Steuerströme für den elektrischen Antrieb mit dem Brennerkopf drehbarer Hilfsvorrichtungen müssen daher über entsprechende Verteiler vom ortsfesten Gehäuse der Schweißpistole an den Rotor, der den Brennerkopf und die mit ihm drehbaren Hilfsvorrichtungen trägt, übergeben werden.

Die Versorgungsleitungen für den Brennerkopf und dessen Hilfseinrichtungen werden zu einem Schweißkabel zusammengefaßt gemeinsam in die Schweißpistole hinein- und herausgeführt und in dem Gehäuse der Schweißpistole an die zugeordneten Versorgungsverteiler angeschlossen. Wenn z. B. an einer Baustelle mit der Schweißpistole geschweißt wird, kann das Schweißkabel im Baustellenverkehr beschädigt werden. Für derartige Fälle ist es vorteilhaft, wenn das beschädigte Schweißkabel gegen ein anderes Schweißkabel möglichst einfach und schnell ausgewechselt werden kann. Hierzu ist es erforderlich, die Anschlüsse der Versorgungsleitungen an die Schweißpistole möglichst einfach zugänglich anzuordnen und möglichst schnell lösen und feststellen zu können. Die Möglichkeit, die Anschlüsse der Versorgungsleitungen an die Schweißpistole einfach und schnell herstellen oder lösen zu können, ist auch für sonstige Fälle erwünscht, z. B. beim Innenschweißen eines Behälters, damit die Schweißpistole zunächst ohne Schweißkabel durch das Mannloch in den Behälter gereicht und erst in diesem mit dem Schweißkabel verbunden werden kann. Bei einer bekannten Schweißpistole der im einleitenden Teil des Anspruchs 1 angegebenen Art hingegen müssen alle Flüssigkeits- und Gasleitungsanschlüsse und der elektrische Kabelanschluß mit Schraubgewindemuffen einzeln hergestellt werden (FR-A-2 352 623).

Durch die Erfindung wird die Aufgabe gelöst, eine elektrische Schweißpistole mit drehbarem Brennerkopf derart auszubilden, daß ein einfaches und rasches Herstellen und Lösen der Leitungsverbindungen zwischen der Schweißpistole und dem die Versorgungsleitungen derselben enthaltenden Schweißkabel ermöglicht ist.

Diese Aufgabe wird durch die Merkmale des Anspruchs 1 gelöst.

Gemäß der Erfindung ist das Traggehäuse der Schweißpistole, in welches alle Versorgungsleitungen gemeinsam eingeführt sind, zur Ausbildung einer Mehrfach-Steckkupplung in einen Steckerkasten und einen Sockelkasten unterteilt, an welchen jeweils eine der beiden Kupplungsteile der jeweils als Steckverbindung ausgebildeten Leitungskupplungen festgelegt sind. Dadurch können alle Leitungsanschlüsse durch Aufstecken des Steckerkastens, in den das Schweißkabel eingeführt ist, auf den Sockelkasten am Schweißpistolengehäuse gemeinsam hergestellt und durch Abziehen des Steckerkastens vom Sockelkasten gemeinsam gelöst werden. Der Steckerkasten bietet ersichtlich eine gute Möglichkeit das Ende des Schweißkabels zur Ausbildung einer sicheren und dauerhaften Zugentlastung am Steckerkasten festzulegen.

Durch die Erfindung ist es auch möglich, die Schweißpistole wahlweise mit unterschiedlichen Steckerkästen zu kuppeln. Insbesondere kann der eine Steckerkasten als Pistolengriff gestaltet sein, durch dessen hohlen Griffteil das Schweißkabel eingeführt ist, so daß die Schweißpistole als Handschweißpistole am Pistolengriff gehandhabt werden kann, an welchem entsprechende Betätigungsschalter griffgünstig angeordnet sind. Der andere Steckerkasten hingegen kann an einem Manipulator angebaut sein, so daß die Schweißpistole für ihre Handhabung durch den Manipulator nur mit dem Sockelkasten ihres Traggehäuses auf den Steckerkasten am Manipulator gesteckt zu werden braucht, um sie am Manipulator zu befestigen und gleichzeitig die Leitungsanschlüsse herzustellen.

In einer bevorzugten Ausgestaltung der erfindungsgemäßen Schweißpistole münden die Flüssigkeits- und Gasleitungen in jeweils eine Ringkammer, die zwischen Simmeringen ausgebildet ist, deren Dichtungslippen an der Außenfläche einer Laufbuchse mit harter, geschliffener Oberfläche anliegen. Dadurch wird eine dauerhafte, verschleißarme und gute Abdichtung der Ringkammern erreicht. Außerdem erfolgt die Schweißstromübergabe an die Antriebswelle des Schweißkopfes mittels einer Kontaktbürste und die Antriebswelle besteht aus einem Schleifringmaterial. Dadurch ist ein konstanter, dauerhafter verlustarmer Stromübergang des Schweißstromes selbst bei hoher Stromstärke gegeben. Es kann für die Kontaktbürste und die Antriebswelle eine für den erstrebten guten Stromübergang gut geeignete Werkstoffpaarung ausgewählt werden, ohne darin durch die zusätzliche Bedingung beschränkt zu sein, daß sich das Material der Antriebswelle gleichzeitig auch für die Erzielung einer solchen Oberflächengüte und Oberflächenhärte eignen müsse, die sich für eine gute Abdichtung der Gas- und Flüssigkeitsverteiler eignet. Das Material der Antriebswelle ist bei einer Kontaktbürste aus Kupfer-Bronzekohle vorzugsweise aus einer Aluminiumlegierung vom Typ AlMgSiO,5F22. Die Laufbuchse ist vorzugsweise aus Stahl.

Die Stromübergabe an die Antriebswelle des Schweißkopfes mittels einer Kontaktbürste ist an sich bekannt (US-A-3 493 716). Dort sind jedoch die Ringkammern, in welche die Flüssigkeits- und Gasleitungen münden, zwischen in Nuten der Antriebswelle sitzenden O-Ringen ausgebildet. Ähnlich ist es an sich bekannt, die Verteiler-Ringkammer zwischen in Nuten der Antriebswelle sitzenden Dichtungsringen auszubilden, welche mit der Innenfläche einer in das Kunststoffgehäuse der Schweißpistole eingesetzten Buchse zusammenwirken (FR-A-2 057 162).

Die Erfindung wird anhand einer beispielhaften Ausführungsform erläutert, die aus der Zeichnung in ihren Einzelheiten ersichtlich ist. In der Zeichnung zeigt

Fig. 1 eine Seitenansicht einer Schweißpistole in schematischer Darstellung,

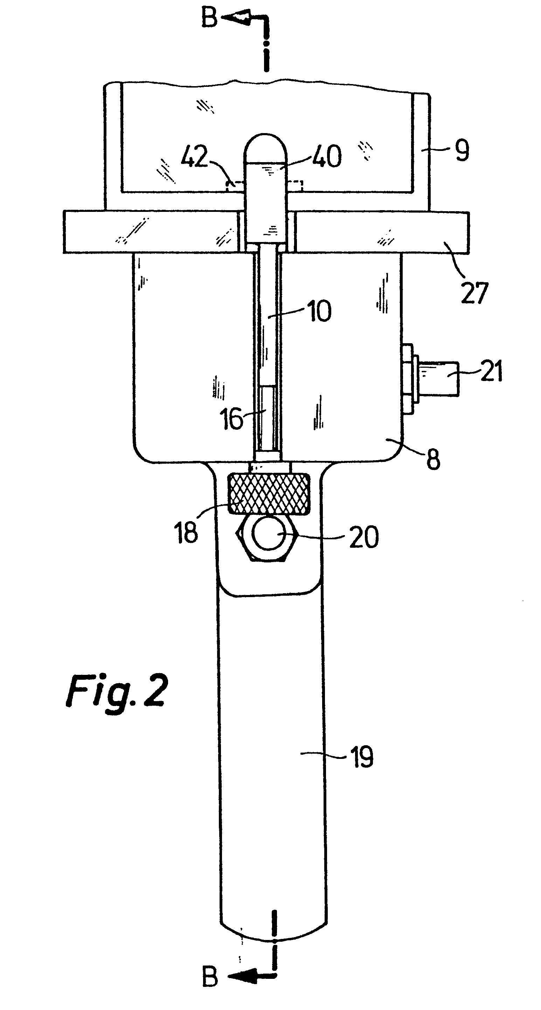

Fig. 2 die Stirnansicht des Traggehäuses der Schweißpistole aus Fig. 1 entsprechend der dort eingetragenen Linie A-A,

Fig. 3 den Längsschnitt durch das Traggehäuse aus Fig. 2 entsprechend der dort eingetragenen Schnittlinie B-B,

Fig. 4 bis 6 Einzelheiten einer Kontaktbürste zur Schweißstromübergabe an den drehbaren Schweißkopf und

Fig. 7 bis 9 Einzelheiten eines Steuerleitungsverteilers für die Steuerstromübergabe an mit dem drehbaren Schweißkopf drehbaren, gesondert angetriebenen und gesteuerten Hilfsvorrichtungen.

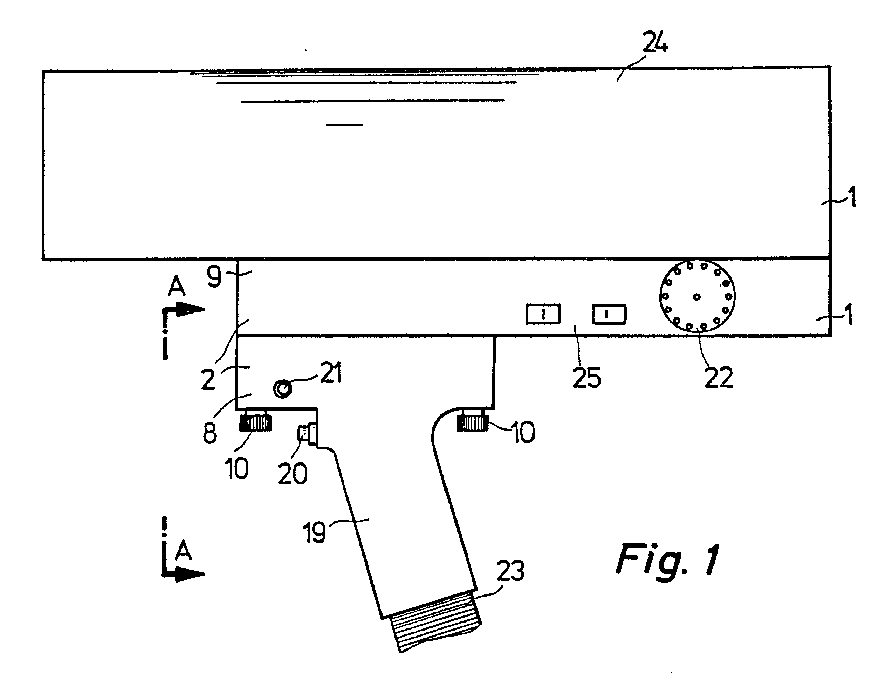

Die Schweißpistole ist in Fig. 1 nur in der Außenansicht gezeigt. Die Schweißpistole weist ein Außengehäuse 1 aus einem rohrförmigen Schutzgehäuse 24 und einem sich an dessen Unterseite erstreckenden Basisgehäuse 25 auf. In dem Schutzgehäuse 24 ist an der linken Seite in Fig. 1 der drehbare Brennerkopf (nicht gezeigt) untergebracht, der über eine sich über die Länge des Schutzgehäuses 24 hin erstreckende Welle angetrieben wird, die im hinteren Teil der Schweißpistole als mit dem Brennerkopf drehbarer Spulenhalter (nicht gezeigt) ausgebildet ist, auf welchem eine Zusatzdrahtspule mitsamt dem Antrieb für den Drahtvorschub angeordnet ist. Das langgestreckte Basisgehäuse 25 enthält am hinteren Ende der Schweißpistole den Antriebsmotor für den Brennerkopf und bildet mit seinem vorderen Teil ein Traggehäuse 2, welches im unteren Teil als Pistolengriff mit einem hohlen Griffteil 19 ausgebildet ist, durch welchen das Schweißkabel 23, welches die Versorgungsleitungen für den Schweißkopf und dessen Hilfsvorrichtungen enthält, in die Schweißpistole hineingeführt ist. Vorn am Pistolengriff ist ein Steuerschalter 20 angeordnet, mit welchem der Schweißzyklus gesteuert werden kann. Seitlich am Pistolengriff ist ein Notausschalter 21 angeordnet, an welchem in Notfällen die Schweißpistole stillgesetzt werden kann.

Das Traggehäuse 2 ist zur Ausbildung einer Mehrfach-Leitungskupplung für alle im Schweißkabel 23 enthaltenen Versorgungsleitungen in einen Sockelkasten 9 am vorderen Ende des Basisgehäuses 25, und einen Steckerkasten 8 unterteilt, an welchem der Griffteil 19 des Pistolengriffs ausgebildet ist. Mittels je einer Verriegelungsvorrichtung 10 am vorderen und hinteren Ende des Steckerkastens 8 kann dieser fest mit dem Sockelkasten 9 verbunden werden. Das Ende des Schweißkabels 23 wird in dem hohlen Griffteil 19 zugentlastet festgelegt.

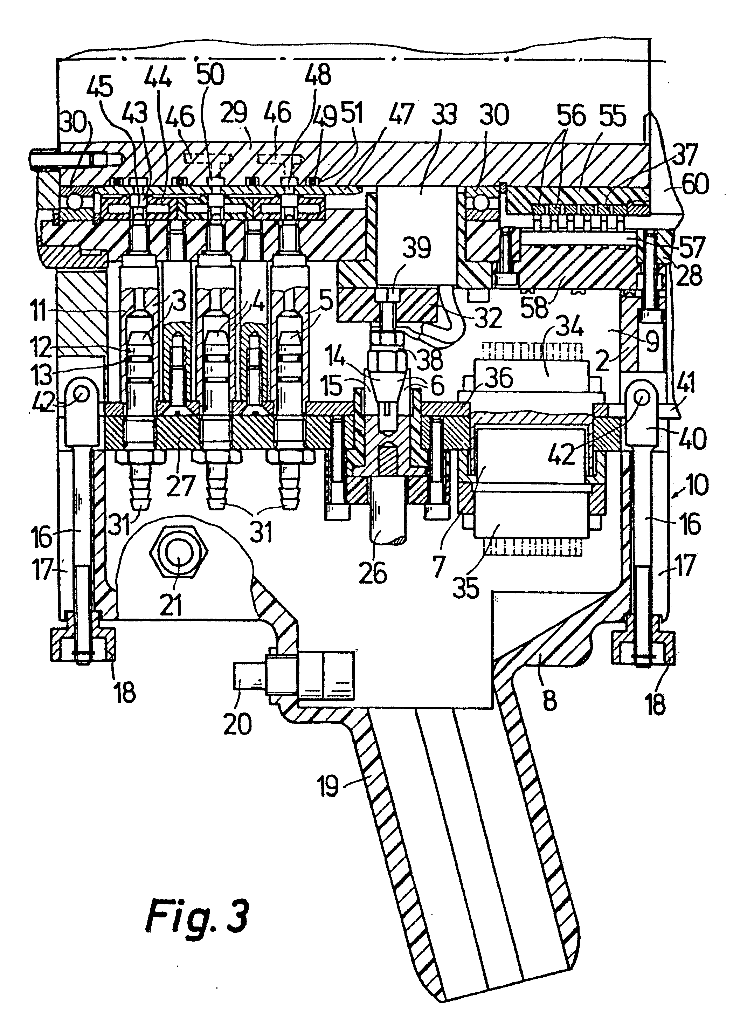

Im Inneren des Traggehäuses 2 (Fig. 3) ist für jede der Versorgungsleitungen, die im Schweißkabel enthalten sind, eine als Steckverbindung ausgebildete Leitungskupplung 3 bis 7 ausgebildet. Die Leitungskupplungen 3 bis 7 sind sämtlich in der vertikalen Längsmittelebene des Tragkastens 2 angeordnet und parallel zueinander ausgerichtet. Der eine Kupplungsteil jeder der Leitungskupplungen 3 bis 7 ist an einer Deckplatte 27 des Steckerkastens 8 festgelegt, wohingegen der zugehörige andere Kupplungsteil der Leitungskupplungen 3 bis 7 in entsprechender Anordnung und Ausrichtung im Sockelkasten 9 festgelegt ist, so daß durch das Ansetzen des Steckerkastens 8 an den Sockelkasten 9 sämtliche Leitungskupplungen 3 bis 7 gemeinsam und gleichzeitig eingekuppelt werden.

Im vorderen Teil des Traggehäuses 2, links in Fig. 3, ist eine Gruppe von drei gleichartig ausgebildeten Leitungskupplungen 3 bis 5 für die Schutzgasleitung, den Kühlwasservorlauf und den Kühlwasserrücklauf angeordnet. Jede dieser Leitungskupplungen 3 bis 5 weist einen an der Deckplatte 27 des Steckerkastens 8 verschraubten, über die Oberseite der Deckplatte 27 hinausstehenden zylindrischen Rohrnippel 12, der am Umfang mit zwei Nuten zur Aufnahme von Dichtungsringen 13 versehen ist, und eine Kupplungshülse 11 auf, die im Sockelkasten 9 in eine Durchgangsbohrung in einem Isolierrohr 28 verschraubt ist, in welchem mittels zweier Kugellager 30 die Welle 29 des Brennerkopfes gelagert ist. Die Rohrnippel 12 enden in über die Unterseite der Deckplatte 27 des Steckerkastens 8 hinausstehende Schlauchnippel 31, auf welches das jeweilige Leitungsende der Gas- bzw. Flüssigkeitsleitungen aufgeschoben und gegebenenfalls mit einer Schelle gesichert werden kann.

An die Gruppe der drei Leitungskupplungen 3 bis 5 für die Gas- bzw. Flüssigkeitsleitungen schließt sich die Leitungskupplung 6 für die Schweißstromleitung 26 an. Der eine Kupplungsteil der Leitungskupplung 6 ist eine in der Deckplatte 27 in einem Isoliergehäuse festgelegte, über die Oberseite der Deckplatte 27 hinausstehende, längsgeschlitzte Konusbuchse 15, die mit einem im Inneren des Sockelkastens 9 in einem am Isolierrohr 28 festgeschraubten Isolierhalter 32 einer Kontaktbürste 33 sitzt, von welchem der Schweißstrom auf die sich drehende Welle 29 des Schweißkopfes übergeben wird.

Durch die Längsschlitze in der hohlkonischen Konusbuchse 15 kann diese sich unter dem Kontaktdruck, mit welchem sie auf den konischen Dorn 14 gepreßt wird, etwas federnd aufweiten, so daß eine möglichst große Kontaktfläche zwischen der Konusbuchse 15 und dem konischen Dorn 14 der Schweißstrom-Leitungskupplung 6 zustandekommt. Diese Kontaktflächen sind für einen möglichst günstigen Stromübergang mit einer Goldplattierung versehen.

Hinter der Schweißstrom-Leitungskupplung 6 schließt sich die Leitungskupplung 7 für die Steuerleitungen an, die als Mehrfachsteckkupplung aus einem an der Bodenplatte des Sockelkastens 9 festgelegten Steckersockel 34 und einem an der Deckplatte 27 des Steckerkastens 8 festgelegten Stecker 35 besteht. Die Ausgänge des Steckersockels 34 sind über nicht gezeigte Leitungsstücke einerseits mit einer Steuerverteilergruppe 37 für die Stromübergabe der Antriebs- und Steuerströme an den sich mit der Welle 29 drehenden Zusatzdraht-Vorschubantrieb (nicht gezeigt), und andererseits über entsprechende Verbindungsleitungen mit den Antriebs- und Steuereingängen des im hinteren Ende der Schweißpistole untergebrachten Antriebsmotors des Brennerkopfes angeschlossen. Außerdem sind an die Ausgänge des Steckersockels 34 Verzweigungsleitungen angeschlossen (nicht gezeigt), die zu einer im hinteren Teil der Schweißpistole an der Seite des Basisgehäuses 25 des Außengehäuses 1 der Schweißpistole angeordnete Referenzsteckdose 22 (Fig. 1) führen, so daß dort ein zusätzlicher Zugriff zu den Steuerleitungen des Schweißkopfes mittels eines auf die Referenzsteckdose 22 steckbaren Steckers eines Steuerkabels (nicht gezeigt) vorhanden ist.

Bis auf die Schweißstrom-Leitungskupplung 6 sind sämtliche Leitungskupplungen 3 bis 5 und 7 derart ausgebildet, daß die Kupplungsteile in der Steckrichtung mit Spiel ineinandergreifen, so daß sie keine Begrenzungsanschläge für die Schweißstrom-Leitungskupplung 6 darstellen, deren Kupplungsteile 15, 16 daher mit dem erforderlichen Anpreßdruck in Steckrichtung gegeneinandergedrückt werden können, ohne daß es hierzu auf die Einhaltung enger Lagetoleranzen für die Teile der anderen Leitungskupplungen 3 bis 5 und 7 ankommt. Wenigstens eines der beiden Kupplungsteile 14, 15 der Schweißstrom-Leitungskupplung 6 kann in der Steckrichtung lageverstellbar sein, beispielsweise dadurch, daß für den Dorn 14, der auf einen im Bürstenhalter 32 verankerten Schraubbolzen 39 aufgeschraubt ist, eine Unterlegscheibe 38 entsprechend gewählter Dicke verwendet wird. Es ist auch möglich, insbesondere den konischen Dorn 14 in Steckrichtung federnd abzustützen, falls die durch die Ausbildung der Längsschlitze in der Konusbuchse 15 erreichte Eigenfederung derselben nicht ausreicht.

Im übrigen wird der Kontaktdruck für die Schweißstrom-Leitungskupplung bis zum Anschlagen der Deckplatte 27 des Steckerkastens 8 an der Bodenplatte 36 des Sockelkastens 9 durch die Verriegelungsvorrichtung 10 für die Verriegelung des Steckerkastens 8 mit dem Sockelkasten 9 bestimmt. Die Verriegelungsvorrichtung 10 weist an der vorderen und hinteren Stirnseite des Traggehäuses 2 jeweils eine Klappschraube 16 auf, welche am Sockelkasten 9 schwenkbar ist, in eine zugeordnete Außennut 17, die an der zugeordneten Außenseite des Steckerkastens in der Schwenkebene der Klappschraube 16 parallel zur Steckrichtung der Leitungskupplungen 3 bis 7 verläuft, und mittels einer handbetätigbaren Mutter 18, die am Stirnrand des Endes der Außennut 17 am Steckerkasten angreift, für das Anpressen des Steckerkastens 8 gegen den Sockelkasten 9 verspannbar ist. Im Sockelkasten 9 weisen die Klappschrauben 16 jeweils einen Vierkantkopf 40 auf, der durch einen Führungsschlitz 41 hindurch, der das Schwenken des Vierkantkopfes 40 zuläßt, ihn jedoch gegen ein Verdrehen um die Schraubenachse verriegelt, über die Bodenplatte 36 des Sockelkastens 9 hinaussteht und dort einen Querstift 42 aufweist, der beidseitig des Führungsschlitzes 41 auf der Bodenplatte 36 schwenkbar aufliegt.

Die Kupplungshülsen 11 der Leitungskupplungen 3 bis 5 für das Schutzgas bzw. das Kühlwasser münden jeweils mit ihrem in das Isolierrohr 28 eingeschraubten Ende in einer Verteilerringkammer 43, die mit einem in der Wand der hohlen Welle 29 ausgebildeten, zugeordneten Leitungskanal 46 in offener Verbindung steht, der zum Brennerkopf führt. Die Ringkammern 43 sind jeweils zwischen zwei Simmeringen 44 ausgebildet, die mit ihren radial inneren Dichtungslippen einander zugewendet sind und mit ihrem Außenumfang am Innenumfang des Isolierrohrs 28 anliegen, an welchem die Welle 29 über die Kugellager 30 abgestützt ist. Zwischen den derselben Ringkammer 43 zugeordneten Simmeringen 44 ist in das Isolierrohr 28 jeweils ein Distanzring 45 eingesetzt, der im Querschnitt U-förmig ausgebildet ist, so daß er eine Außenumfangsnut begrenzt, in welche die Mündung der zugeordneten Kupplungshülse 11 einmündet, und welcher an seinem U-Steg vorzugsweise mehrfach durchbohrt ist, so daß die erforderliche Strömungsverbindung mit der entsprechenden Ringkammer 43 hergestellt ist. Die einander benachbarten Simmeringe 44 einander benachbarter Ringkammern 43 sind mit ihren Axialrücken aneinander abgestützt. Mit ihren radial innen angeordneten Dichtungslippen liegen die Simmeringe 44 gleitend an einer Stahllaufbuchse 47 auf, die auf die Welle 29 aufgeschoben und an zwischen die Laufbuchse 47 und die Welle 29 eingeklemmten O-Ringen an der Welle 29 festgelegt ist, so daß sie sich mit dieser dreht. In Höhe jeder Ringkammer 43 zwischen den Simmeringen 44 weist die Stahllaufbuchse 47 eine Umfangslochreihe von am Buchsenumfang verteilten radialen Verbindungslöchern 48 auf, während unter jeder Umfangsreihe von Verbindungslöchern 48 im Außenumfang der Welle 29 eine Verteilerringnut 50 ausgebildet ist, an deren Boden der zugeordnete Leitungskanal 46 mündet. Dadurch daß die Ringkammer 43 mit der zugeordneten Verteilerringnut 50 über eine Mehrzahl von Verbindungslöchern 48 verbunden sind, ist der Strömungswiderstand für das in den zugeordneten Leitungskanal 46 in der Welle 29 einzuleitende Strömungsmittel bzw. — für den Kühlwasser-Rücklauf — für das aus dem zugeordneten Leitungskanal 46 austretende Kühlwasser entsprechend gering. Beidseitig jeder Verteilerringnut 50 ist jeweils einer der O-Ringe 49 in einer in der Welle 29 ausgebildeten Ringnut 51 angeordnet, so daß die Verteilerringnuten 50 beidseitig abgedichtet sind.

Durch die Welle 29 wird der Schweißstrom der Schweißelektrode am Brennerkopf zugeleitet. Der Schweißstrom wird der Welle 29 von der Kontaktbürste 33 der Schweißstrom-Leitungskupplung 6 übergeben. Daher ist die Welle 29 aus einem an das Material der Kontaktbürste 33 angepaßten Schleifringmaterial, vorzugsweise eine Aluminiumlegierung, damit für einen möglichst guten und großflächigen Stromübergang nach dem gegenseitigen Einschleifen der Kontaktfläche der Kontaktbürste 33 und der zugeordneten Lauffläche der Welle 29 gesorgt ist. Bei einem derartigen Material für die Welle 29 ist es jedoch zumindest aufwendig, eine ausreichende Oberflächengüte zu erzielen, um die mit den Leitungskanälen 46 in der Welle 29 zusammenwirkenden Gas- und Flüssigkeitsverteiler unmittelbar an der Umfangsfläche der sich drehenden Welle mittels Simmeringen abzudichten und dabei eine hinreichend gute Abdichtung zu erzielen. Daher ist bei der gezeigten Ausführungsform die Stahllaufbuchse 47 auf die Welle 29 aufgeschoben. Die geschliffene Außenfläche der sich mit der Welle gegenüber den Simmeringen 44 drehenden Stahllaufbuchse 47 gewährleistet eine gute, verschleißarme Abdichtung der Gas- und Flüssigkeitsverteiler im Zusammenwirken mit den Dichtungslippen der Simmeringe bei der Drehbewegung der Welle 29, während an der Innenseite der Stahllaufbuchse 47 einfache O-Ringe zur Abdichtung vorgesehen sein können, weil hier keine Relativbewegung zwischen den abzudichtenden Teilen auftritt.

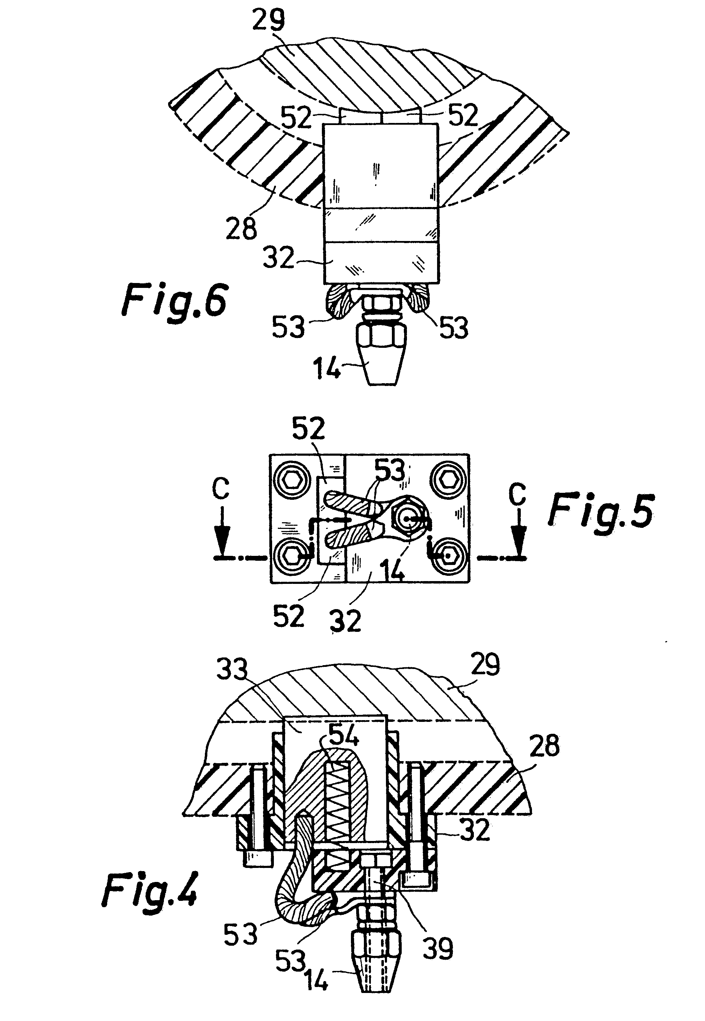

Die Ausbildung und Anordnung der Kontaktbürste 33 und ihres Isolierhalters 32, an welchem der konische Dorn 14 der Schweißstrom-Leitungskupplung 6 abgestützt ist, ist aus der Fig. 4 bis 6 ersichtlich. Fig. 4 zeigt den die Achse der Welle 29 enthaltenden Längsschnitt entsprechend der Schnittlinie C-C in Fig. 5, in welcher die Draufsicht gezeigt ist, während Fig. 6 die Stirnansicht in Blickrichtung parallel zur Achse der Welle 29 zeigt. Die Kontaktbürste 33 ist in zwei in Umfangsrichtung der Welle 29 hintereinander angeordnete Bürstenhälften 52 unterteilt, die im Isolierhalter 32 der Kontaktbürste 33, der in eine Öffnung in dem Isolierrohr 28 eingelassen und mit diesem verschraubt ist, gesondert gleitend geführt sind und gesondert von jeweils einer Feder 54, die am Isolierhalter 32 abgestützt ist, gegen die Umfangsfläche der Welle 29 gedrückt werden. In jede Bürstenhälfte 52 ist das eine Ende eines Leitungsstückes 53 in Form einer Litze eingelötet. An ihrem anderen Ende weisen die Leitungsstücke 53 jeweils eine Ringscheibe auf, die auf den konischen Dorn 14 der Schweißstrom-Leitungskupplung haltenden Schraubbolzen 39 aufgesteckt und mittels einer zwischen dem Dorn 14 und dem Isolierhalter 32 auf den Schraubbolzen 39 geschraubten Mutter an den Isolierhalter 32 angeklemmt sind.

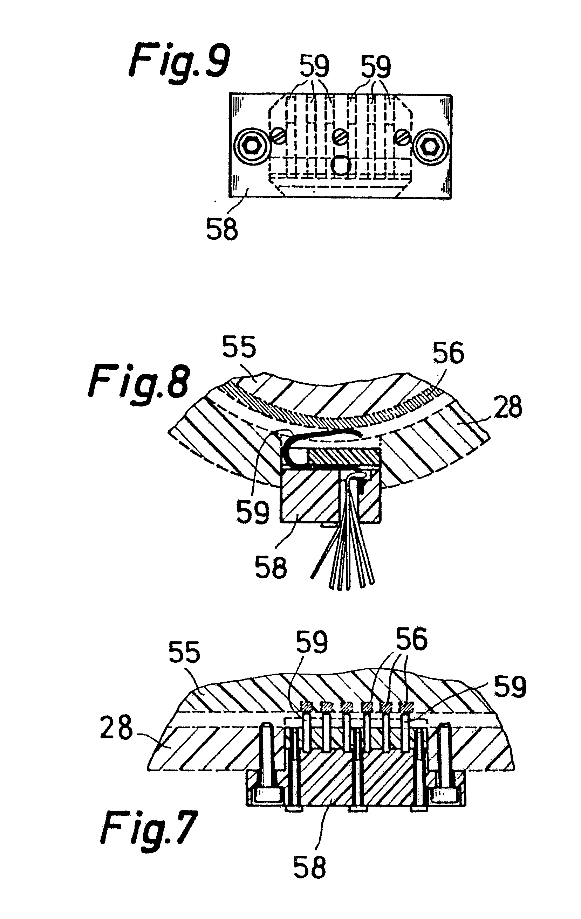

Wie aus Fig. 3 ersichtlich, sitzt die Kontaktbürste 33 zwischen der Gas- und Flüssigkeitsverteilergruppe und der Steuerverteilergruppe 37, die an einer Isolierbuchse 55, die mit der Welle 29 drehfest auf diese aufgeschoben ist, mehrere Schleifringe 56 aufweist. In einer Umfangsöffnung 57 des Isolierrohrs 28 ist ein Isoliermaterialhalter 58 eingelassen, der mit dem Isolierrohr 28 verschraubt ist und eine der Anzahl der Schleifringe 56 entsprechende Anzahl von Schleifkontaktfedern 59 trägt (Fig. 7—9), die an entsprechende Ausgänge des Sockels 34 der Leitungskupplung 7 der Steuerleitungen angeschlossen sind. Die Schleifringe 56 sind ihrerseits über nicht gezeigte Leitungsverbindungen an die Speise- und Steueranschlüsse eines Zusatzdraht-Vorschubmotors (nicht gezeigt) angeschlossen, der auf einem über den Flansch 60 an das hintere Ende der Welle 29 angeflanschten Zusatzdraht-Spulenhalter (nicht gezeigt) angeordnet ist, über welchen die Welle 29 angetrieben ist. Die Einzelheiten der Steuerverteilergruppe 37 sind aus den Fig. 7 bis 9 ersichtlich.

## Patentansprüche

1. Elektrische Schweißpistole, die einen drehbaren Brennerkopf und dessen Hilfseinrichtungen in einem Außengehäuse (1) aufweist, in welchem eine gehäusefeste Nabe zur drehbaren Lagerung der Antriebswelle (29) des Brennerkopfes ausgebildet ist und an welchem zur Handhabung der Schweißpistole ein Traggehäuse (2) ausgebildet ist, in welches die Versorgungsleitungen des Brennerkopfes und der Hilfseinrichtungen gemeinsam eingeführt sind, wobei in den Versorgungsleitungen Flüssigkeits- und Gasleitungen, die in axial beidseitig abgedichtete Ringkammern (43) münden, mit denen in der Welle (29) ausgebildete Leitungskanäle (46) in Verbindung stehen, und elektrische Leitungen enthalten sind, die an eine Stromübergabevorrichtung zur Übergabe des Schweißstromes an die aus elektrisch leitendem Material bestehende Welle (29) angeschlossen sind, dadurch gekennzeichnet, daß die Versorgungsleitungen in dem Traggehäuse (2) jeweils eine als Steckverbindung ausgebildete Leitungskupplung (3 bis 7) aufweisen und das Traggehäuse (2) in einen Steckerkasten (8) und einen Sockelkasten (9) unterteilt ist, an welchen jeweils eines der beiden Kupplungsteile der Leitungskupplungen (3 bis 7) festgelegt ist und die parallel zueinander ausgerichtet gemeinsam zusammensteckbar sind und mittels einer Verriegelungsvorrichtung (10) in der zusammengesteckten Anordnung miteinander verriegelbar sind.

2. Elektrische Schweißpistole nach Anspruch 1, bei welcher die elektrischen Leitungen eine Schweißstromleitung sowie Steuerleitungen enthalten, dadurch gekennzeichnet, daß die Leitungskupplungen (3 bis 5) der Flüssigkeits- und Gasleitungen als Hülsenkupplungen ausgebildet sind, bei denen der eine Kupplungsteil als zylindrische Hülse (11), und der andere Kupplungsteil als in die Hülse (11) einsteckbarer zylindrischer Rohrnippel (12) ausgebildet sind, der wenigstens einen Dichtungsring (13) aufweist, daß die Leitungskupplung (6) der Schweißstromleitung eine Konuskupplung ist, bei welcher der eine Kupplungsteil ein konischer Dorn (14), und der andere Kupplungsteil eine längsgeschlitze Konusbuchse (15) sind, und daß die Leitungskupplung (7) der Steuerleitungen eine Mehrstiftkupplung ist.

3. Elektrische Schweißpistole nach Anspruch 1 oder 2, dadurch gekennzeichnet, daß die Verriegelungsvorrichtung (10) am Sockelkasten (9) schwenkbar abgestützte Klappschrauben (16) aufweist, die jeweils in eine parallel zur Steckrichtung der Leitungskupplungen (3 bis 7) verlaufende Außennut (17) des Steckerkastens (8) einschwenkbar und mittels manuell betätigbarer Muttern (18) am Steckerkasten (8) verspannbar sind.

4. Elektrische Schweißpistole nach einem der Ansprüche 1 bis 3, dadurch gekennzeichnet, daß der Steckerkasten (8) als Pistolengriff gestaltet ist, durch dessen hohlen Griffteil (19) die zu einem Kabel (23) zusammengefaßten Versorgungsleitungen eingeführt sind und welcher einen Steuerschalter (20) und einen Notausschalter (21) aufweist.

5. Elektrische Schweißpistole nach einem der Ansprüche 2 bis 4, dadurch gekennzeichnet, daß die Leitungskupplung (7) der Steuerleitungen einen zu einer Referenzsteckdose (22) am Außengehäuse (1) im Abstand von dem Traggehäuse (2) führenden Verzweigungsanschluß bildet.

6. Elektrische Schweißpistole nach einem der Ansprüche 1 bis 5, dadurch gekennzeichnet, daß die Stromübergabevorrichtung eine an der Welle (29) angreifende Kontaktbürste (33) ist und die Welle (29) aus einem Schleifringmaterial besteht, und daß die Ringkammern (43) jeweils axial zwischen Simmeringen (44) ausgebildet sind, die paarweise mit ihren den Ringkammern (43) jeweils zugewendeten Dichtungslippen einander benachbart auf einer Laufbuchse (47) angeordnet sind, die auf der Welle (29) festgelegt ist und die jeweilige Mündung der Leitungskanäle (46) in der Welle (29) mit der zugeordneten Ringkammer (43) verbindende Löcher (48) aufweist.

7. Elektrische Schweißpistole nach Anspruch 6, dadurch gekennzeichnet, daß die Laufbuchse (47) mittels in Ringnuten (51) der Welle (29) jeweils beidseitig der Ringkammern (43) angeordneten O-Ringen (49) an der Welle gehalten ist.

8. Elektrische Schweißpistole nach Anspruch 6 oder 7, dadurch gekennzeichnet, daß die Laufbuchse (47) für jede Ringkammer (43) eine Umfangslochreihe von am Buchsenumfang verteilten Verbindungslöchern (48) aufweist und die Welle (29) unter jeder der Umfangslochreihen eine Verteilerringnut (50) aufweist, in welcher der jeweilige Leitungskanal (46) mündet.

9. Elektrische Schweißpistole nach einem der Ansprüche 6 bis 8, dadurch gekennzeichnet, daß die Kontaktbürste (33) zwischen der Laufbuchse (47) und einer Steuerverteilerbaugruppe (37) angeordnet ist, die eine auf der Welle (29) festgelegte Isolierbuchse (55) mit mehreren Schleifringen (56) aufweist, die mit gehäusefesten Schleifkontaktfedern (59) zusammenwirken.

**Claims**

1. Electrical welding torch, which has a rotable burner head and the auxiliary devices of the latter in an outer housing (1) in which is formed a hub rigid with the housing for the rotatable journalling of the drive shaft (29) of the burner head, and at which is formed a carrier housing (2) for handling the welding torch, the supply lines of the burner head and of the auxiliary devices being introduced together into the carrier housing; the supply lines containing liquid and gas ducts which debouch in annular chambers (43) which are sealed on both axial sides and which are connected with service ducts (46) formed in the shaft (29) as well as the electrical lines connected to a current delivery device for delivering the welding current to the shaft (29) which is made of electrically conductive material, characterised in that each of the supply lines in the carrier housing (2) has respectively a plug-in type line connector (3 to 7) and the carrier housing (2) is divided into a plug-in box (8) and a socket box (9) at which a respective one of the two coupling parts of the line couplings (3 to 7) is fixed, the coupling parts being pluggable together in mutually parallel alignment and being interlockable by means of a locking device (10) in the plugged-together configuration.

2. Electrical welding torch according to claim 1, in which the electrical lines contain a welding current line as well as control lines, characterised in that the line connectors (3 to 5) of the liquid and gas ducts are formed als sleeve connections in which one coupling part is formed as a cylindrical sleeve (11) while the other coupling part is formed as a cylindrical tube nipple (12) which can be plugged into the sleeve (11) and which has at least one sealing ring (13); in that the line coupling (6) of the welding current is a conical coupling in which one of the coupling parts is a conical arbor (14) while the other coupling part is a longitudinally slotted tapered bush (15); and that the line coupling (7) of the control lines is a multipin coupling.

3. Electrical welding torch according to claim 1 or 2, characterised in that the locking device (10) is provided with hinge bolts (16) which are pivotally supported on the socket box (9), which are respectively pivotable into an outer groove (17) of the plug-in box (8) extending parallel to the plug-in direction of the line connectors (3 to 7) and which can be clamped at the plug-in box (8) by means of manually actuatable nuts (18).

4. Electrical welding torch according to one of claims 1 to 3, characterised in that the plug-in box (8) is formed as a pistol grip which has a hollow grip part (19) through which are introduced the supply lines held together as one cable (23) and which has a control switch (20) and an emergency cut-out switch (21).

5. Electrical welding torch according to one of claims 2 to 4, characterised in that the line coupling (7) of the control lines forms a branch connection leading to a reference outlet receptacle (22) at the outer housing (1) spaced from the carrier housing (2).

6. Electrical welding torch according to one of claims 1 to 5, characterised in that the current delivery device is a wiper brush (33) engaging the shaft (29) and the shaft (29) consists of a slip ring material; and that each of the annular chambers (43) is formed axially between seal rings (44) which are arranged in pairs mutually adjacent to each other with respective sealing lips facing the annular chambers (43) on a bush (47) fixed on the shaft (29), the bush having holes (48) connecting the respective ends of ducts (46) in the shaft (29) with the associated annular chamber (43).

7. Electrical welding torch according to claim 6, characterised in that the bush (47) is held on the shaft (29) by means of O-rings (49) arranged on both sides of the annular chambers (43) in annular grooves (51) in the shaft (29).

8. Electrical welding torch according to claim 6 or 7, characterised in that the bush (47) for each annular chamber (43) has a peripheral row of connecting holes (48) distributed around the periphery of the bush and the shaft (29) has an annular distributor groove (50) beneath each of the rows of circumferential holes into which the respective duct (46) opens.

9. Electrical welding torch according to one of claims 6 to 8, characterised in that the wiper brush (33) is arranged between the bush (47) and a control distributor assembly (37) which has an insulating bush (55) fixed on the shaft (29) with several slip rings (56) co-operating with sliding contact springs (59) fixed in the hausing.


**Revendications**

1. Pistolet à souder électrique comportant une tête de torche rotative et ses dispositifs auxiliaires dans un carter extérieur (1), dans lequel est formé un moyeu solidaire du carter pour supporter à rotation l'arbre d'entraînement (29) de la tête de torche et auquel est ajouté, pour permettre de manipuler le pistolet à souder, un carter de support (2), dans lequel sont guidés ensemble les conduites d'alimentation de la tête de torche et des dispositifs auxiliaires, des conduites d'alimentation comportant des conduites de liquide et de gaz qui débouchent dans des chambres annulaires (43) étanchées axialement des deux côtés et qui se trouvent en liaison avec les canaux de conduite (46) formés dans l'arbre (29), et des conduites électriques qui sont reliées à un dispositif d'amenée de courant pour amener le courant de soudage à l'arbre (29) constitué d'un matériau conducteur de l'électricité, caractérisé en ce que les conduites d'alimentation dans le carter support (2) comportent un coupleur de conduites (3 à 7) en forme de liaison correspondante à enfichage et en ce que le carter de support (2) est divisé en un boîtier d'enfichage (8) et un boîtier de socle (9), auquel est fixée chaque fois l'une des deux parties de couplage des couplers de conduites (3 à 7) et qui sont couplables ensemble en étant orientés parallèlement l'une à l'autre et qui son verrouillables l'un avec l'autre en position d'enfichage mutuel à l'aide d'un dispositif de verrouillage (10).

2. Pistolet à souder électrique selon la revendication 1, dans lequel les conduites électriques comportent une conduite de courant de soudage et des conduites de commande, caractérise en ce que les coupleurs de conduites (3 à 5) des conduites de liquide et de gaz sont réalisés sous la forme de coupleurs à manchon dans lesquels l'une des parties de coupleur est réalisée sous la forme d'un manchon cylindrique (11) et l'autre partie de coupleur sous la forme d'un embout tubulaire cylindrique enfichable (12), comportant au moins un anneau d'étanchéité (13), en ce que le coupleur de conduites (6) de la conduite de courant de soudage est un coupleur conique dont l'une des parties de couplage est une broche conique (14) et l'autre partie de couplage est un manchon conique (15) fendu longitudinalement, et en ce que le coupleur de conduites (7) des conduites de commande est une coupleur multibroches.

3. Pistolet à souder électrique selon la revendication 1 ou 2, caractérise en ce que le dispositif de verrouillage (10) comporte des vis rabattables (16) appuyées de façon oscillante sur le boîtier de socle (9) qui chacune peuvent être basculées dans une rainure extérieure (17) du boîtier d'enfichage orientée parallèlement à la direction d'enfichage des coupleurs de conduites (3 à 7) et peuvent être serrées sur le boîtier d'enfichage à l'aide d'écrous (18) à actionnement manuel.

4. Pistolet à souder électrique selon l'une des revendications 1 à 3, caractérise en ce que le boîtier d'enfichage (8) est réalisé sous la forme d'une poignée de pistolet à travers la partie de poignée creuse (19) de laquelle les conduites d'alimentation rassemblées en un câble (23) sont guidées et qui comporte un commutateur de commande (20) et un commutateur d'urgence (21).

5. Pistolet à souder électrique selon l'une des revendications 2 à 4, caractérise en ce que le coupleur de conduites (7) des conduites de commande forme un raccord de dérivation conduisant à un boîtier de prise de référence (22) sur le carter extérieur (1) à distance du carter de support (2).

6. Pistolet à souder électrique selon l'une des revendications 1 à 5, caractérise en ce que le dispositif de transmission de courant est une brosse de contact (33) venant en appui sur l'arbre (29) qui se compose d'un matériau pour bague de friction et en ce que les chambres annulaires (43) sont réalisées chacune axialement entre des bagues à lèvres et à ressort (44) qui sont disposées par paire avec leurs lèores d'étanchéité disposées chacune du côté des chambres annulaires (43) à proximité l'une de l'autre sur un manchon de contact tournant (47) fixé sur l'arbre (29) et l'embouchure correspondante des canaux des conduites (46) dans l'arbre (29) présente des trous (48) reliés aux chambres annulaires annexées (43).

7. Pistolet à souder électrique selon la revendication 6, caractérise en ce que le manchon tournant (47) est maintenu sur l'arbre (29) à l'aide de joints toriques (49) disposés des deux côtés de la chambre annulaire (43) dans des rainures annulaires (51) de l'arbre (29).

8. Pistolet à souder électrique selon l'une des revendications 6 ou 7, caractérise en ce que le manchon tournant (47) présente pour chaque chambre annulaire (43) une rangée de trous périphériques constitués de trous de liaison (48) répartis à la périphérie du manchon et l'arbre (29) présente en-dessous de chacune des rangées de trous périphériques une rainure annulaire de répartition (50) dans laquelle débouche le canal d'amenée correspondant (46).

9. Pistolet à souder électrique selon l'une des revendications 6 à 8, caractérisé en ce que la brosse de contact (33) est disposée entre le manchon tournant (47) et un groupe de montage de répartition de commande (37) comportant un manchon isolant (55) fixé sur l'arbre (29) avec plusieurs anneaux de friction (56), qui coopère avec des ressorts de contact de friction (59) solidaires de carter.

*Fig. 1*

*Fig. 2*

*Fig. 3*

29

52 52

28

32

**Fig.6**

53 53

14

52

53

C C **Fig.5**

52 32 14

33 29

54 28

32

**Fig.4**

53 39

53 14

Fig.9

59  59

58

Fig.8

55  56

28

59

58

55  59  56

59

28

58

Fig.7